# EUROPÄISCHE PATENTSCHRIFT

(11) **EP 3 535 176 B1**
(45) Veröffentlichungstag und Bekanntmachung des Hinweises auf die Patenterteilung: **09.12.2020**
(21) Anmeldenummer: 17797095.1
(22) Anmeldetag: 26.10.2017
(51) Int. Cl.: B62D 1/04

(54) **LENKRADSKELETT UND LENKRAD**
STEERING WHEEL SKELETON AND STEERING WHEEL
SQUELETTE DE VOLANT ET VOLANT

(30) Priorität: 03.11.2016 DE 102016120962
(43) Veröffentlichungstag der Anmeldung: 11.09.2019
(73) Patentinhaber: Dalphi Metal España, S.A., 36213 Vigo (ES)
(72) Erfinder: LOIS MARTÍNEZ, Carlos, 36201 Vigo (ES); OLLERO OLLERO, Jorge, 36210 Vigo (ES); CONDE BOUZA, Fabián, 36340 Nigrán (ES)
(74) Vertreter: ZF Patentabteilung - DIPS
(86) Internationale Anmeldenummer: PCT/EP2017/077385
(87) Internationale Veröffentlichungsnummer: WO 2018/082993

(56) Entgegenhaltungen:
- EP-A2- 0 244 270
- WO-A1-2004/050452
- US-A- 4 010 658

## Beschreibung

Die Erfindung betrifft ein Lenkradskelett nach dem Oberbegriff von Anspruch 1.. Daneben betrifft die Erfindung ein Lenkrad mit einem Lenkradskelett.

Lenkradskelette sind in verschiedenen Ausführungsformen, insbesondere mit 2, 3 oder 4 Speichen bekannt. So zeigt gemäß dem Oberbegriff des Anspruchs 1 z.B. die US, 4,010,658 ein solches Lenkradskelett für Personenkraftfahrzeuge mit 2 Speichen aus Massivstahlstahl, die mit dem Lenkradkranz verschweißt sind. Daneben zeigt die EP 0 244 270 A2 ein weiteres Lenkradskelett für Personenkraftfahrzeuge mit 3 Speichen aus massivem Aluminiumblech, die mit dem Lenkradkranz aus einem U-förmigen Aluminiumprofil verschweißt sind, und die WO 2004/050452 ein aus Aluminium gegossenes Lenkradskelett mit 4 Speichen, das für die horizontale Anordnung in Schwerkraftfahrzeugen vorgesehen ist. Moderne Lenkräder für Personenkraftzeuge enthalten ein Lenkradskelett, das einstückig aus Magnesium in einem Druckgußverfahren hergestellt wird und werden im Fahrzeug schräg zur Horizontalen angeordnet.

In Zusammenhang mit Lenkrädern von Kraftfahrzeugen existieren unterschiedliche Tests, welche die neu konstruierten Lenkräder bestehen müssen. Zum einen werden Ermüdungsdefekte getestet. Hierbei ist es wünschenswert, dass die Lenkräder, insbesondere die Lenkradskelette einer hohen Dauerbelastung standhalten. Außerdem ist es notwendig, dass die Lenkräder, insbesondere die Lenkradskelette eine angepasste Biegesteifigkeit aufweisen, da im Crashtest insbesondere der untere Abschnitt des Lenkradkranzes nur einen genormten Widerstand gegen einen Körperkontakt mit einem Dummy bieten darf.

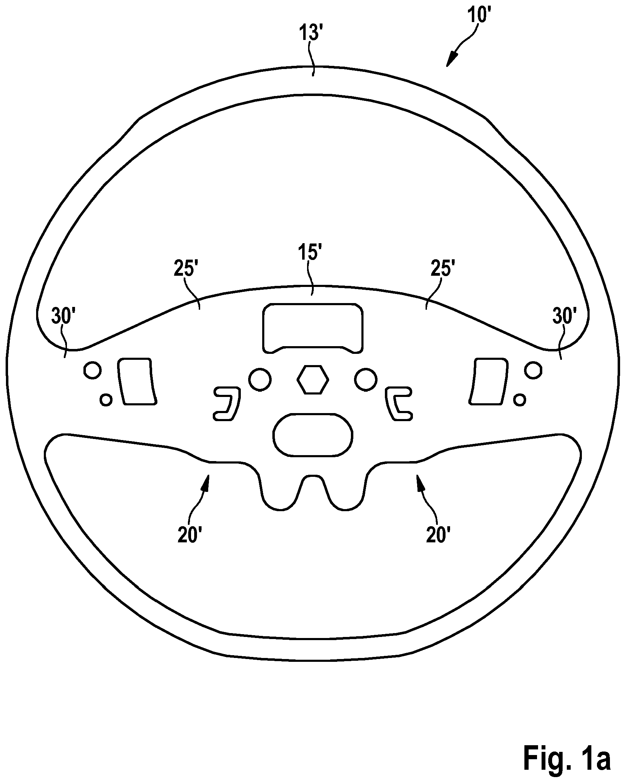

Um einer hohen Dauerbelastung standzuhalten sind bekannte Lenkräder vor allem im Verbindungsbereich der Speichen mit dem Lenkradkranz verstärkt ausgebildet. Beispielsweise wird in diesem Zusammenhang auf Fig. 1a verwiesen.

In Fig. 1a ist ein Lenkradskelett 10' dargestellt. Dieses Lenkradskelett 10' umfasst eine Nabe 15' und zwei Speichen 20'. Die Speichen 20' dienen zur Verbindung der Nabe 15' mit dem Lenkradkranz 13'. Die Speichen 20' weisen jeweils ausgehend von der Nabe 15' einen Tragabschnitt 25' und einen dem Tragabschnitt 25' folgenden Verbindungsabschnitt 30' auf. Der Verbindungsabschnitt 30' beginnt am schmalsten Abschnitt des jeweiligen Tragabschnitts 25'.

Der Verbindungsabschnitt 30' weist in Relation zum Tragabschnitt 25' eine Verbreiterung auf. Ein derartiges Lenkradskelett 10' weist eine hohe Dauerbelastbarkeit auf, da die Verbindung der Speichern 20' an dem Lenkradkranz 13' äußerst robust ist. Allerdings weist dieses Lenkradskelett 10' eine äußerst hohe Biegesteifigkeit auf.

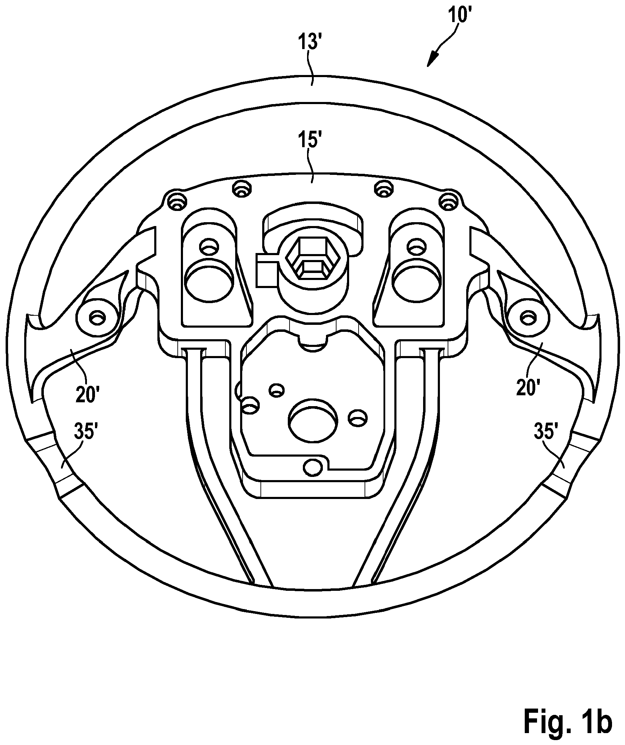

In Fig. 1b ist ein weiteres Lenkradskelett 10' dargestellt. Auch dieses Lenkradskelet 10' weist eine Nabe 15' sowie zwei Speichen 20' auf. In diesem Ausführungsbeispiel ist der Lenkradkranz 13' weitergebildet. Zur Beeinflussung der Biegesteifigkeit werden in die Lenkradkränze teilweise Aussparungen 35' eingearbeitet bzw. der Querschnitt der Lenkradkränze 13' verringert. Die Biegesteifigkeit des Lenkradskeletts 10' wird aufgrund der Aussparungen 35' verringert. Allerdings wird dadurch auch die Dauerbelastbarkeit entsprechend verringert. Sobald eines der beiden genannten Kriterien, nämlich die Biegesteifigkeit oder die Dauerbelastbarkeit durch Konfiguration bzw. Konstruktionsänderung des Lenkradskelettes verbessert wird, hat dies oftmals einen negativen Einfluss auf das jeweils andere Kriterium.

Die Aufgabe der vorliegenden Erfindung ist es, ein weiterentwickeltes Lenkradskelett anzugeben, wobei die Konstruktion insbesondere derart ausgebildet ist, dass sowohl die Biegesteifigkeit als auch die Dauerbelastbarkeit positiv beeinflusst werden können.

Ferner besteht die Aufgabe darin, ein Lenkrad mit einem weiterentwickelten Lenkradskelett anzugeben.

Erfindungsgemäß wird diese Aufgabe im Hinblick auf den Lenkradkranz durch den Gegenstand des Anspruches 1 und im Hinblick auf das Lenkrad durch den Gegenstand des Anspruchs 10 angegeben.

Zur Lösung der eingangs genannten Aufgabe sieht die Erfindung ein Lenkradskelett mit den Merkmalen des Anspruches 1 vor.

Es ist möglich, dass zwischen dem Tragabschnitt und dem Verbindungsabschnitt noch weitere Abschnitte der Speiche ausgebildet sind. Mit anderen Worten umfasst die Speiche mindestens einen Tragabschnitt und mindestens einen Verbindungsabschnitt. Der Tragabschnitt ist mit anderen Worten zwischen dem Verbindungsabschnitt und der Nabe des Lenkradskeletts ausgebildet. Der Verbindungsabschnitt ist mit anderen Worten zwischen dem Lenkradkranz und dem Tragabschnitt der Speiche ausgebildet. Der Verbindungsabschnitt kann am schmalsten Abschnitt des jeweiligen Tragabschnitts beginnen.

Das äußerste Ende des Verbindungsabschnitts kann als ausgehend von der Nabe des Lenkradskeletts radial äußerstes Ende der Speiche bezeichnet werden. Das äußerste Ende des Verbindungsabschnitts kann an die Innenkannte des Lenkradkranzes angrenzen. Das äußerste Ende des Verbindungsabschnitts kann einen der Innenkante des Lenkradskranzes entsprechenden Radius aufweisen.

Erfindungsgemäß nimmt die Breite des Verbindungsabschnitts ausgehend vom Tragabschnitt in Richtung des äußersten Endes Verbindungsabschnitts zumindest abschnittsweise ab und läuft in Annäherung an die Innenkante des Lenkradkranzes überproportional verjüngt zu.

Aufgrund dieser Ausbildung des Anknüpfungsabschnitts oder Anbindungsabschnitts der Speiche an den Lenkradkranz wird zum einen die Biegesteifigkeit positiv beeinflusst und zum anderen trotzdem eine gute Dauerbelastbarkeit erzielt.

Als eine überproportionale Verjüngung wird in diesem Zusammenhang eine derartige Verjüngung bezeichnet, die nicht nur leicht angeschrägt ist sondern ausgehend von einem Eckpunkt des Verbindungsabschnitts abrupt bzw. steil verläuft. Eine leichte Anschrägung bzw. Anschmiegung der Strebe an das Lenkradskelett ist nicht mit einer überproportionalen Verjüngung des Verbindungsabschnittes gleichzusetzen. Eine überproportionale Verjüngung ist in diesem Fall als Gegenteil der stetigen Verjüngung anzusehen.

Es ist möglich, dass der Verbindungsabschnitt an die überproportionale Verjüngung anschließend zumindest abschnittsweise etwas breiter ausgestaltet ist. Dies ermöglicht beispielsweise eine verbesserte Verbindung bzw. Anbindung der Speiche an den Lenkradkranz.

Es ist möglich, dass die Speiche mit dem Lenkradkranz mittels Stoffschloss, insbesondere durch Kleben und/oder Verschweißen verbunden ist. Es ist auch möglich, dass das Lenkradskelett monolithisch, d.h. einteilig ausgebildet ist, so dass das Verbinden der Speiche mit dem Lenkradkranz auf kristalliner Ebene stattfindet. Die Speiche geht in diesem Zusammenhang in den Lenkradkranz über.

Vorzugsweise ist zwischen einer ersten Kante des Verbindungsabschnitts und der Innenkante des Lenkradkranzes ein überproportional verjüngter Aussparungsabschnitt ausgebildet. Dieser Aussparungsabschnitt kann nasenförmig oder hakenförmig oder dreieckförmig ausgebildet sein.

Vorzugsweise ist der überproportional verjüngte Aussparungsabschnitt als Teil einer großen Aussparung zwischen einer ersten Kante der Speiche und der Innenkante des Lenkradkranzes ausgebildet. Während die große Aussparung im Wesentlichen stetig verlaufende Kantenabschnitte umfasst, ist zwischen der ersten Kante des Verbindungsabschnittes, und der Innenkante des Lenkradkranzes der überproportional verjüngte Aussparungsabschnitt ausgebildet. Die erste Kante des Verbindungsabschnittes ist als Teilabschnitt der ersten Kante der Speiche ausgebildet. In Angrenzung an die große Aussparung wird die Nasenform oder Hakenform oder Dreiecksform sichtbar.

Zwischen einer ersten Kante der Speiche und der Innenkante des Lenkradkranzes kann eine große Aussparung ausgebildet sein, die die Form eines Halbmondes oder einer Sichel aufweist. Die erste Kante der Speiche ist vorzugsweise in der unteren Hälfte des Lenkradskeletts ausgebildet. Die erste Kante der Speiche kann als Unterkante der Speiche bezeichnet werden. Als untere Hälfte des Lenkradskeletts ist die Hälfte des Lenkradskeletts zu verstehen, die unterhalb einer Querachse, die durch die 9-Uhr-Position und 3-Uhr-Position des Lenkradskeletts verläuft, ausgebildet.

Zwischen der zweiten Kante und der Innenkante des Lenkradkranzes kann ebenfalls eine zweite große Aussparung ausgebildet sein. Diese zweite große Aussparung kann die Form eines Halbmondes oder einer Sichel aufweisen. Die zweite Kante der Speiche ist vorzugsweise in der oberen Hälfte des Lenkradskeletts ausgebildet. Die zweite Kante der Speiche kann als Oberkante der Speiche bezeichnet werden. Als obere Hälfte des Lenkradskeletts ist die Hälfte des Lenkradskeletts zu verstehen, die oberhalb einer Querachse, die durch die 9-Uhr-Position und 3-Uhr-Position des Lenkradskeletts verläuft, ausgebildet.

Die erste große Aussparung kann zwischen der Innenkante des Lenkradkranzes und zwei Unterkanten von zwei Speichen ausgebildet sein. Die zweite große Aussparung kann zwischen der Innenkante des Lenkradkranzes und zwei Oberkanten von zwei Speichen ausgebildet sein.

Die erste Kante des Verbindungsabschnittes ist vorzugsweise in der unteren Hälfte des Lenkradskeletts ausgebildet. Als untere Hälfte des Lenkradskeletts ist die Hälfte des Lenkradskeletts zu verstehen, die unterhalb einer Querachse, die durch die 9-Uhr-Position und 3-Uhr-Position des Lenkradskeletts verläuft, ausgebildet.

Der Tragabschnitt ist vorzugsweise trapezförmig und/oder keilförmig ausgebildet, wobei die Breite des Tragabschnitts ausgehend von der Nabe in Richtung des Verbindungsabschnitts abnimmt. Die Abnahme der Breite verläuft vorzugsweise stetig. Insgesamt kann die erste Kante des Tragabschnitts und/oder die zweite Kante des Tragabschnitts leicht angeschrägt in Richtung der Innenkante des Lenkradkranzes verlaufen.

Der Verbindungsabschnitt kann bogenförmig und/oder flossenartig und/oder als Dreieck mit gebogenen Kanten ausgebildet sein. Vorzugsweise ist der Verbindungsabschnitt in Richtung der oberen Hälfte des Lenkradskeletts gebogen. Die obere Hälfte des Lenkradskeletts ist vorzugsweise oberhalb einer Querachse des Lenkradskeletts, die durch die 9-Uhr-Position und 3-Uhr-Position des Lenkrads verläuft, ausgebildet. Mit anderen Worten ist der Verbindungsabschnitt nach oben gebogen. Vorzugsweise ist der Verbindungsabschnitt in Richtung der 2-Uhr-Position oder der 10-Uhr-Position des Lenkradskeletts gebogen.

In einer weiteren Ausführungsform der Erfindung kann der Verbindungsabschnitt eine Vertiefung, insbesondere eine Einkerbung und/oder Prägung aufweisen. Eine Einkerbung und/oder Prägung kann zur Materialversteifung dienen.

In wiederum einer weiteren Ausführungsform der Erfindung kann der Verbindungsabschnitt eine Materialaussparung aufweisen. Eine Materialaussparung bzw. Materialausnehmung dient zur Gewichtsreduzierung und/oder Materialreduzierung. Die erste Kante und/oder die zweite Kante des Verbindungsabschnitts kann gebogen sein/können gebogen sein. Sofern beide Kanten des Verbindungsabschnittes gebogen sind, wobei eine erste Kante vorzugsweise in der unteren Hälfte des Lenkradskeletts ausgebildet ist und eine zweite Kante des Verbindungsabschnitts vorzugsweise in der oberen Hälfte des Lenkradskeletts ausgebildet ist, kann ein bogenförmiger Verbindungsabschnitt ausgebildet werden.

Der Verbindungsabschnitt kann am äußersten Ende zwischen der ersten Kante und der Innenkante des Lenkradkranzes einen weiteren bogenförmigen Abschnitt aufweisen. Dieser weitere bogenförmige Abschnitt kann der Vermeidung von scharfen Kanten dienen. Dieser zweite bogenförmige Abschnitt weist im Wesentlichen eine spitzwinklige Form auf, wobei die dem spitzen Winkel gegenüberliegende Seite gebogen verläuft. Der spitze Winkel kann 10 Grad - 40 Grad, insbesondere 15 Grad - 30 Grad, insbesondere 18 Grad - 25 Grad, insbesondere 20 Grad, betragen.

Der Verbindungsabschnitt kann somit aus einem bogenförmigen Abschnitt und einem weiteren Wölbungsabschnitt bestehen. Mit anderen Worten kann der Verbindungsabschnitt zumindest einen bogenförmigen Abschnitt und einen Wölbungsabschnitt aufweisen. Hierdurch ist es möglich, dass zum einen die Anforderungen an die Biegesteifigkeit sowie an die Dauerbelastbarkeit erfüllt werden und zum anderen eine ergonomische Form des Lenkradskelettes gebildet wird. Insbesondere kann eine derartige Form des Lenkradskelettes zur Verfügung gestellt werden, die zu keinen Verletzungen bei den Monteuren führt.

Sofern beide Kanten des Verbindungsabschnittes gebogen sind, weisen diese Kanten vorzugsweise unterschiedliche Radien auf. In einer besonders bevorzugten Ausführungsform der Erfindung weist die erste Kante einen größeren Radius als die zweite Kante des Verbindungsabschnitts auf. Da die erste Kante einen größeren Radius als die zweite Kante aufweist kann der an der ersten Kante des Verbindungsabschnitts ausgebildete überproportional verjüngte Aussparungsabschnitt ausgebildet werden.

In einer weiteren Ausführungsform der Erfindung kann das Lenkradskelett zwei Speichen aufweisen, wobei beide Speichen jeweils einen Verbindungsabschnitt aufweisen, wobei die Breiten der Verbindungsabschnitte ausgehend von Tragabschnitten in Richtung der äußeren Enden der jeweiligen Verbindungsabschnitt zumindest abschnittsweise abnehmen und in Annäherung an die Innenkante des Lenkradkranzes überproportional verjüngt zulaufen.

In einer besonders bevorzugten Ausführungsform weist das Lenkradskelett lediglich zwei Speichen auf. Sowohl in der oberen Hälfte des Lenkradskeletts als auch in der unteren Hälfte des Lenkradskeletts werden vorzugsweise im Wesentlichen halbmondförmige und/oder sichelförmige Aussparungen gebildet. Die Speichen verlaufen vorzugsweise auf der Querachse des Lenkradskeletts, wobei die Querachse durch die 9-Uhr-Position und 3-Uhr-Position des Lenkradskeletts verläuft. Mit anderen Worten werden große halbmondförmige und/oder sichelförmige Aussparungen unter- und oberhalb der Querachse des Lenkradskeletts gebildet. Zumindest eine halbmondförmige Aussparung weist an den Ecken überproportional verjüngte Aussparungsabschnitte, die insbesondere nasenförmig oder hakenförmig oder dreiecksförmig ausgebildet sind, auf.

In einer weiteren Ausführungsform der Erfindung sind die zwei Speichen zu einer Spiegelachse, die durch die 12-Uhr-Position und 6-Uhr-Position des Lenkradskeletts verläuft, spiegelsymmetrisch ausgebildet. Dies ermöglicht eine einfache Herstellung des Lenkradskeletts.

Vorzugsweise weist der Lenkradkranz im Wesentlichen keine Querschnittsreduzierungen auf. Insbesondere sind keine Querschnittsreduzierungen bzw. Aussparungen, wie diese in Fig. 1b dargestellt sind, ausgebildet. Demnach wird die Dauerbelastbarkeit durch Querschnittsreduzierungen und/oder Aussparungen im Bereich des Lenkradkranzes nicht beeinträchtigt.

Ein weiterer Aspekt der Erfindung betrifft ein Lenkrad mit einem erfindungsgemäßen Lenkradskelett, wobei das Lenkradskelett umschäumt und/oder ummantelt ist. Es ergeben sich ähnliche Vorteile, wie diese bereits im Zusammenhang mit dem erfindungsgemäßen Lenkradskelett dargelegt sind.

Es ist möglich, dass die Umschäumung und/oder die Ummantelung der Kontur des Lenkradskeletts folgt/folgen. In einer weiteren Ausführungsform der Erfindung ist es möglich, dass die Ummantelung und/oder Umschäumung den überproportional verjüngten Aussparungsabschnitt auffüllt. Somit kann sich der Benutzer des Lenkrades nicht an dem Lenkrad verletzen bzw. ein Finger des Fahrers kann nicht im überproportional verjüngten Aussparungsabschnitt eingeklemmt werden.

Gemäß einer bevorzugten Ausführungsform ist das erfindungsgemäße Lenkrad (weiterhin) so ausgebildet, dass es zumindest einen Schalter aufweist, der an einer Speiche angeordnet ist, und/ oder dass es ein Airbagmodul aufweist, das mit dem Lenkradskelett gekoppelt ist.

Die Erfindung wird im Folgenden anhand von Ausführungsbeispielen unter Bezugnahme auf die beigefügten, schematischen Zeichnungen näher erläutert.

Darin zeigen:
- Fig. 2: ein erfindungsgemäßen Lenkradskelett in einer Draufsicht; und
- Fig. 3: die Detaildarstellung A gemäß Fig. 2.

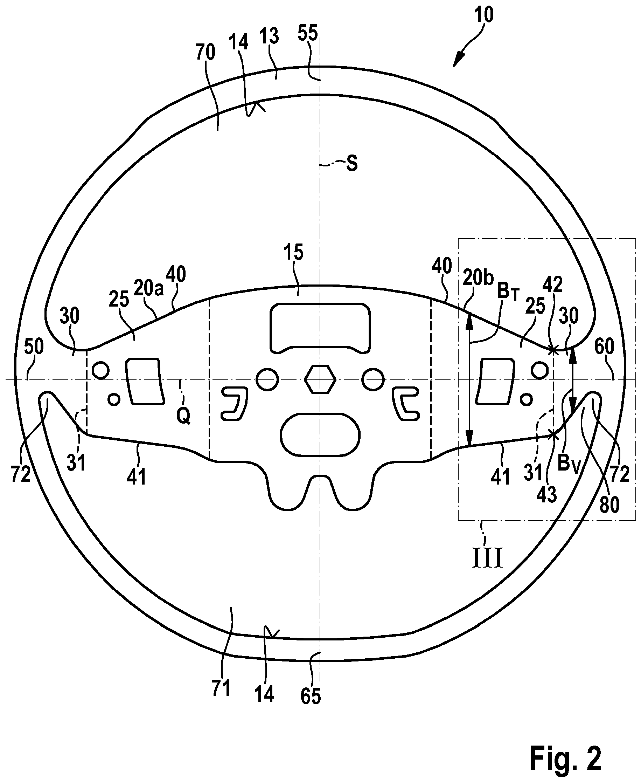

In Fig. 2 ist der prinzipielle Aufbau des erfindungsgemäßen Lenkradskelettes 10 dargestellt. Das Lenkradskelett 10 umfasst eine Nabe 15, einen Lenkradkranz 13 sowie zwei Speichen 20a und 20b. Die Speichen 20a und 20b verbinden die Nabe 15 und den Lenkradkranz 13. Beide Speichen 20a und 20b weisen jeweils einen Tragabschnitt 25 sowie einen Verbindungsabschnitt 30 auf.

Bei der Speiche 20a handelt es sich um die in Draufsicht linke Speiche. Die Speiche 20b ist die rechte Speiche.

Ebenfalls zu erkennen ist die Querachse Q. Die Querachse Q verläuft durch die 9-Uhr-Position 50 sowie durch die 3-Uhr-Position 60. Die Symmetrieachse S verläuft hingegen durch die 12-Uhr-Position 55 und durch die 6-Uhr-Position 65. Die beiden Speichen 20a und 20b sind hinsichtlich der Spiegelachse S spiegelsymmetrisch bzw. achsensymmetrisch ausgebildet.

Die Tragabschnitte 25 schließen sich links und rechts an die Nabe 15 an. Die Tragabschnitte 25 weisen im Wesentlichen eine Trapezform auf. An die Trageabschnitte 25 grenzen die Verbindungsabschnitte 30 an. Die Verbindungsabschnitte 30 beginnen am schmalsten Bereich des jeweiligen Tragabschnittes 25. Die Breite B_{T} der Tragabschnitte 25 nimmt ausgehend von der Nabe 15 in Richtung des Lenkradskeletts 13 ab. Die Abnahme der Breite B_{T} verläuft stetig.

Der Verbindungsabschnitt 30 beginnt an dem Punkt 42 oder in Nähe des Punktes 42 der Oberkante 40 der Speiche 20a oder 20b. Bei dem Punkt 42 handelt es sich um den Tiefpunkt der Oberkante 40 der Speiche 20a oder 20b. An der Unterkante 41 der Speiche beginnt der Verbindungsabschnitt am Punkt 43. Bei dem Punkt 43 handelt es sich bei der dargestellten Kurve der Unterkanten 41 um den Wendepunkt. Die gedachte Verbindungskante 31 verläuft somit durch den Tiefpunkt 42 und den Wendepunkt 43 der dargestellten Oberkante 40 und Unterkante 41.

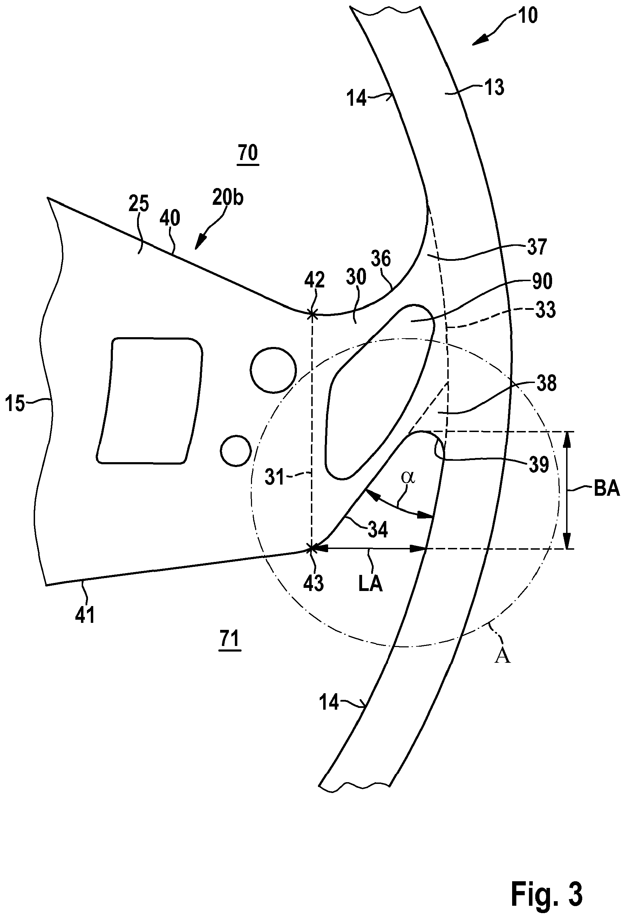

Bezüglich der exakten Form des Verbindungsabschnittes 30 wird auf die Detaildarstellung A gemäß Fig. 3 verwiesen.

In der oberen Hälfte des Lenkradskeletts 10 ist die große Aussparung 70 ausgebildet. Bei der oberen Hälfte des Lenkradskeletts 10 handelt es sich um die Hälfte, die oberhalb der Querachse Q ausgebildet ist. Die große Aussparung 70 ist zwischen der Innenkante 14 des Lenkradkranzes 13 und den zwei Oberkanten 40 der zwei Speichen 20a ,20b ausgebildet. Die Aussparung 70 weist im Wesentlichen eine Sichelform auf.

In der unteren Hälfte des Lenkradskeletts 10, die unterhalb der Querachse Q ausgebildet ist, ist ebenfalls eine Aussparung 71 ausgebildet. Die große Aussparung 71 ist zwischen der Innenkante 14 des Lenkradkranzes 13 und den zwei Unterkanten 41 der zwei Speichen 20a, 20b ausgebildet. Diese Aussparung 71 weist im Wesentlichen eine Sichelform auf, wobei die Ecken 72 der sichelförmigen Aussparung 71 durch die überproportional verjüngten Aussparungsabschnitte 80 gebildet sind.

Die Breite B_{T} des Tragabschnittes 25 und die Breite Bv des Verbindungsabschnittes 30 verlaufen jeweils senkrecht zur Querachse Q.

Wie der Fig. 3 entnommen werden kann, nimmt die Breite Bv des Verbindungsabschnittes 30 ausgehend vom Tragabschnitt 25 in Richtung des äußersten Endes 33 des Verbindungsabschnittes 30 zumindest abschnittsweise ab und verläuft in Annäherung an die Innenkante 14 des Lenkradkranzes 13 überproportional verjüngt.

Zwischen der ersten Kante 34 des Verbindungsabschnittes 30 und der Innenkante 14 des Lenkradkranzes 13 ist ein überproportional verjüngter Aussparungsabschnitt 80 ausgebildet, der die in Fig. 2 dargestellte Ecke der halbmondförmigen Aussparung 71 bildet. Der überproportional verjüngte Aussparungsabschnitt 80 verläuft bogenförmig, wobei sowohl die erste Kante 34 als auch die zweite Kante 36 des Verbindungsabschnitts 30 gebogen sind. Die beiden Kanten 34 und 36 weisen unterschiedliche Radien auf. Der Radius der ersten Kante 34 ist größer als der Radius der zweiten Kante 36.

In Fig. 3 ist schematisch dargestellt, dass der Verbindungsabschnitt 30 zum einen aus einem bogenförmigen Abschnitt 37 und aus einem weiteren Wölbungsabschnitt 38 besteht. Der Wölbungsabschnitt 38, der im Wesentlichen dreieckförmig mit einer Innenwölbung 39 ausgebildet ist, dient dazu, dass sich ein Arbeiter nicht an der ansonsten spitz zulaufenden Ausnehmung verletzen kann.

Die erste Kante 34 des Verbindungsabschnittes 30 ist als Teilabschnitt der Unterkante 41 der Speiche 20 ausgebildet. Die zweite Kante 36 des Verbindungsabschnittes 30 ist hingegen als Abschnitt der Oberkante 40 der Speiche 20a oder Speiche 20b ausgebildet.

Zwischen der ersten Kante 34 des Verbindungsabschnitts 30 und der Innenkante 14 des Lenkradkranzes 13 ist ein überproportional verjüngter Aussparungsabschnitt 80 ausgebildet. Der Aussparungsabschnitt 80 ist hakenförmig ausgebildet. Der Aussparungsabschnitt 80 ist in Relation zur Aussparung 71 überproportional verjüngt. D.h. dass der Aussparungsabschnitt 80 nicht stetig verjüngt oder sanft gekrümmt ist. Zwischen der zweiten Kante 36 des Verbindungsabschnitts 30 und der Innenkante 14 des Lenkradkranzes 13 ist hingegen kein überproportional verjüngter Aussparungsabschnitt ausgebildet. Die Aussparung 70 weist eine relativ flache Krümmung auf. Die zweite Kante 36 schmiegt sich sanft an die Innenkante 14 des Lenkradkranzes 13 an.

Wie in Fig. 3 schematisch dargestellt, ist die Länge L_{A} des Aussparungsabschnittes 80 etwas geringer als die Breite B_{A} des Aussparungsabschnittes 80. Es ist möglich, dass die Länge L_{A} des Aussparungsabschnittes 80 der Breite B_{A} des Aussparungsabschnittes 80 entspricht. Die Länge L_{A} verläuft im Wesentlichen parallel zur Querachse Q des Lenkradskeletts 10. Die Breite B_{A} des Aussparungsabschnitts 80 verläuft hingegen senkrecht zur Querachse Q und parallel zur Symmetrieachse S.

Zwischen der ersten Kante 34 des Verbindungsabschnittes 30 und der Innenkante 14 des Lenkradkranzes 13 ist ein Öffnungswinkel α ausgebildet. Dieser Winkel α beträgt 10 Grad bis 40 Grad, insbesondere 15 Grad bis 30 Grad, insbesondere 18 Grad bis 25 Grad, insbesondere 20 Grad.

Der Verbindungsabschnitt 30 weist eine Vertiefung 90 auf. Die Vertiefung 90 kann als Einkerbung und/oder Prägung ausgebildet sein. Die Einkerbung und/oder Prägung kann zur Materialversteifung dienen.

### Bezugszeichenliste

- 10': Lenkradskelett
- 13': Lenkradkranz
- 15': Nabe
- 20': Speiche
- 25': Tragabschnitt
- 30': Verbindungsabschnitt
- 35': Aussparung
- 10: Lenkradskelett
- 13: Lenkradkranz
- 14: Innenkante
- 15: Nabe
- 20a, 20b: Speiche
- 25: Tragabschnitt
- 30: Verbindungsabschnitt
- 31: Verbindungskante
- 33: Äußerstes Ende
- 34: Erste Kante
- 36: Zweite Kante
- 37: Bogenförmiger Abschnitt
- 38: Wölbungsabschnitt
- 39: Innenwölbung
- 40: Oberkante Speiche
- 41: Unterkante Speiche
- 42: Punkt
- 43: Punkt
- 50: 9-Uhr-Position
- 55: 12-Uhr-Position
- 60: 3-Uhr-Position
- 65: 6-Uhr-Position
- 70: Aussparung
- 71: Aussparung
- 72: Ecke
- 80: Aussparungsabschnitt
- 90: Vertiefung
- B_{A}: Breite Aussparung
- B_{T}: Breite Tragabschnitt
- B_{V}: Breite Verbindungsabschnitt
- L_{A}: Länge Aussparung
- Q: Querachse
- S: Spiegelachse
- α: Öffnungswinkel

## Patentansprüche

1. Lenkradskelett (10) mit einer Nabe (15), einem Lenkradkranz (13) und zwei die Nabe (15) und den Lenkradkranz (13) verbindenden Speichen (20a, 20b), wobei die beiden Speichen (20a, 20b) ausgehend von der Nabe (15) jeweils einen Tragabschnitt (25) und einen dem Tragabschnitt (25) folgenden Verbindungsabschnitt (30) aufweisen, wobei die Speichen (20a, 20b) am äußersten Ende (33) des Verbindungsabschnitts (30) mit dem Lenkradkranz (13) verbunden sind,
**dadurch gekennzeichnet, dass**
der Tragabschnitt (25) trapezförmig und/oder keilförmig ausgebildet ist, und die Breite (B_{T}) des Tragabschnitts (25) ausgehend von der Nabe (15) in Richtung des Verbindungsabschnitts (30) abnimmt, und
wobei die Breite (B_{V}) des Verbindungsabschnitts (30) ausgehend vom Tragabschnitt (25) in Richtung des äußersten Endes (33) des Verbindungsabschnitts (30) zumindest abschnittsweise abnimmt und in Annäherung an die Innenkante (14) des Lenkradkranzes (13) zumindest abschnittsweise überproportional verjüngt zuläuft,
indem eine erste Kante (34) und eine zweite Kante (36) des Verbindungsabschnitts (30) gebogen sind, und beiden Kanten (34, 36) unterschiedliche Radien aufweisen.

2. Lenkradskelett (10) nach Anspruch 1,
**dadurch gekennzeichnet, dass**
zwischen der ersten Kante (34) des Verbindungsabschnitts (30) und der Innenkante (14) des Lenkradkranzes (13) ein überproportional verjüngter Aussparungsabschnitt (80)nasenförmig, hakenförmig oder dreieckförmig ausgebildet ist.

3. Lenkradskelett (10) nach Anspruch 2,
**dadurch gekennzeichnet, dass**
die erste Kante (34) des Verbindungsabschnitts (30) in der unteren Hälfte des Lenkradskeletts (10) ausgebildet ist.

4. Lenkradskelett (10) nach einem der Ansprüche 1 bis 3,
**dadurch gekennzeichnet, dass**
das Lenkradskelett (10) monolithisch ausgebildet ist.

5. Lenkradskelett (10) nach einem der Ansprüche 1 bis 4,
**dadurch gekennzeichnet, dass**
der Verbindungsabschnitt (30) bogenförmig und/oder flossenartig ausgebildet ist.

6. Lenkradskelett (10) nach einem der Ansprüche 1 bis 5,
**dadurch gekennzeichnet, dass** im Verbindungsabschnitt (30) eine Vertiefung (90), insbesondere eine Einkerbung und/oder Prägung, und/oder eine Materialaussparung ausgebildet ist.

7. Lenkradskelett (10) nach einem der Ansprüche 1 bis 5,
**dadurch gekennzeichnet, dass** zwischen der ersten Kante (34) des Verbindungsabschnittes (30) und der Innenkante (14) des Lenkradkranzes (13) ein Öffnungswinkel (a) ausgebildet ist, der 10 bis 40 Grad beträgt.

8. Lenkradskelett (10) nach einem der Ansprüche 1 bis 7,
**dadurch gekennzeichnet, dass**
die zwei Speichen (20a, 20b) zu einer Spiegelachse (S), die durch die 12-Uhr-Position und 6-Uhr-Position des Lenkradskeletts (13) verläuft, spiegelsymmetrisch ausgebildet sind.

9. Lenkradskelett (10) nach einem der Ansprüche 1 bis 8,
**dadurch gekennzeichnet, dass**
der Lenkradkranz (13) im Wesentlichen keine Querschnittsreduzierungen aufweist.

10. Lenkrad mit einem Lenkradskelett (10) nach einem der Ansprüche 1 bis 9, wobei das Lenkradskelett (10) umschäumt und/oder ummantelt ist und/ oder wobei das Lenkrad zumindest einen Schalter aufweist, der an einer Speiche angeordnet ist, und/ oder wobei das Lenkrad ein Airbagmodul aufweist, das mit dem Lenkradskelett gekoppelt ist.

## Claims

1. A steering wheel skeleton (10) comprising a hub (15), a steering wheel rim (13) and two spokes (20a, 20b) connecting the hub (15) and the steering wheel rim (13), wherein, starting from the hub (15), each of the two spokes (20a, 20b) includes a bearing portion (25) and a connecting portion (30) following the bearing portion (25), the spokes (20a, 20b) being connected to the steering wheel rim (13) at the outermost end (33) of the connecting portion (30),
**characterized in that**
the bearing portion (25) is trapezoid and/or wedge shaped, and the width (B_{T}) of the bearing portion (25) is decreasing starting from the hub (15) in the direction of the connecting portion (30), and
wherein the width (Bv) of the connecting portion (30) is decreasing at least in portions starting from the bearing portion (25) in the direction of the outermost end (33) of the connecting portion (30) and is disproportionately tapered at least in portions when it approaches the inner edge (14) of the steering wheel rim (13),
with a first edge (34) and a second edge (36) of the connecting portion (30) being bent and with the two edges (34, 36) preferably having different radii.

2. The steering wheel skeleton (10) according to claim 1,
**characterized in that**
between the first edge (34) of the connecting portion (30) and the inner edge (14) of the steering wheel rim (13) a disproportionately tapered recessed portion (80) is formed which is especially nose-shaped, hook-shaped or triangular.

3. The steering wheel skeleton (10) according to claim 2,
**characterized in that**
the first edge (34) of the connecting portion (30) is configured in the lower half of the steering wheel skeleton (10).

4. The steering wheel skeleton (10) according to any one of the claims 1 to 3,
**characterized in that**
the steering wheel skeleton (10) is formed in a monolithic manner.

5. The steering wheel skeleton (10) according to any one of the claims 1 to 4,
**characterized in that**
the connecting portion (30) is curved and/or fin-shaped.

6. The steering wheel skeleton (10) according to any one of the claims 1 to 5,
**characterized in that** in the connecting portion (30) an indentation (90), especially a notch and/or embossing, and/or material recess is/are formed.

7. The steering wheel skeleton (10) according to any one of the claims 1 to 5,
**characterized in that** an angle of aperture (a) of 10 degrees to 40 degrees is formed between the first edge (34) of the connecting portion (30) and the inner edge (14) of the steering wheel rim (13).

8. The steering wheel skeleton (10) according to any one of the claims 1 to 7,
**characterized in that**
the two spokes (20a, 20b) are configured to be mirror-symmetrical to an axis of reflection (S) extending across the 12 o'clock and 6 o'clock position of the steering wheel skeleton (13).

9. The steering wheel skeleton (10) according to any one of the claims 1 to 8,
**characterized in that**
the steering wheel rim (13) has substantially no reductions of cross-section.

10. A steering wheel comprising a steering wheel skeleton (10) according to any one of the claims 1 to 9, wherein the steering wheel skeleton (10) is foam-padded and/or coated and/or wherein the steering wheel includes at least one switch which is arranged on a spoke and/or wherein the steering wheel includes an airbag module which is coupled to the steering wheel skeleton.

## Revendications

1. Armature de volant (10) avec un moyeu (15), une jante de volant (13) et deux rayons (20a, 20b) reliant le moyeu (15) et la jante de volant (13), pour laquelle les deux rayons (20a, 20b) possèdent à partir du moyeu (15) chacun une section de support (25) et une section de liaison (30) suivant la section de support (25), pour laquelle les rayons (20a, 20b) à l'extrémité la plus extérieure (33) de la section de liaison (30) sont reliés à la jante de volant (13),
**caractérisée en ce que**
la section de support (25) est trapézoïdale et/ou en forme de coin, et la largeur (B_{T}) de la section de support (25) diminue à partir du moyeu (15) en direction de la section de liaison (30), et pour laquelle la largeur (Bv) de la section de liaison (30) partant de la section de support (25) dans la direction de l'extrémité la plus à l'extérieur (33) de la section de liaison (30) diminue au moins en partie et à mesure qu'elle s'approche du bord intérieur (14) de la jante de volant (13) se rétrécit au moins en partie de manière disproportionnée, **en ce qu'**un premier bord (34) et un second bord (36) de la section de liaison (30) sont repliés, et les deux bords (34, 36) ont des rayons différents.

2. Armature de volant (10) selon la revendication 1,
**caractérisée en ce que**
entre le premier bord (34) de la section de liaison (30) et le bord intérieur (14) de la jante de volant (13) est prévue une section d'évidement (80) se rétrécissant de manière disproportionnée (80), en forme de nez, en forme de crochet ou en forme de triangle.

3. Armature de volant (10) selon la revendication 2,
**caractérisée en ce que**
le premier bord (34) de la section de liaison (30) est formé dans la moitié inférieure de l'armature de volant (10).

4. Armature de volant (10) selon l'une des revendications 1 à 3,
**caractérisée en ce que**
l'armature de volant (10) est monolithique.

5. Armature de volant (10) selon l'une des revendications 1 à 4,
**caractérisée en ce que**
la section de liaison (30) est en forme de coude et/ou en forme d'ailette.

6. Armature de volant (10) selon l'une des revendications 1 à 5,
**caractérisée en ce qu'**un évidement (90), en particulier une encoche et/ou un gaufrage, et/ou un évidement de matière est formé dans la section de liaison (30).

7. Armature de volant (10) selon l'une des revendications 1 à 5,
**caractérisée en ce qu'**entre le premier bord (34) de la section de liaison (30) et le bord intérieur (14) de la jante de volant (13) est formé un angle d'ouverture (a) qui est de 10 à 40 degrés.

8. Armature de volant (10) selon l'une des revendications 1 à 7,
**caractérisée en ce que**
les deux rayons (20a, 20b) par rapport un axe de miroir (S) qui passe par la position 12 heures et la position 6 heures de l'armature de volant (13), sont conçus symétriquement en miroir.

9. Armature de volant (10) selon l'une des revendications 1 à 8,
**caractérisée en ce que**
la jante de volant (13) ne présente essentiellement aucune réduction de section transversale.

10. Volant avec une armature de volant (10) selon l'une des revendications 1 à 9, pour lequel l'armature de volant (10) est moussée et/ou gainée et/ou pour lequel le volant comporte au moins un interrupteur qui est disposé sur un rayon, et/ou pour lequel le volant possède un module airbag couplé à l'armature de volant.
